# DEMANDE DE BREVET EUROPEEN

(11) **EP 4 716 232 A1**
(43) Date de publication de la demande: **25.03.2026**
(21) Numéro de dépôt: 25198204.7
(22) Date de dépôt: 26.08.2025
(51) Int. Cl.: H04Q 9/00

(54) **PROCEDE DE COMMUNICATION DANS UN SYSTEME DE GESTION AUTOMATISEE DE COMPTEURS INTELLIGENTS**

(30) Priorité: 29.08.2024 FR 2409208
(71) Demandeur: SAGEMCOM ENERGY & TELECOM SAS, 92270 Bois-Colombes (FR)
(72) Inventeur: TEBOULLE, Henri, 92270 BOIS-COLOMBES (FR); GRINCOURT, Christophe, 92270 BOIS-COLOMBES (FR)
(74) Mandataire: Cabinet Le Guen Maillet

(57) **Abrégé**

Un compteur intelligent (211, 212) comporte une première interface de communication (230) permettant une première voie de communication avec un système d'information (110) utilisant l'Internet (101) par l'intermédiaire d'une passerelle résidentielle (201, 202), et une deuxième interface de communication (250) permettant une deuxième voie de communication utilisant un réseau cellulaire (102). Le compteur intelligent (211, 212) implémente un premier mode de communication dans lequel une voie de communication principale est utilisée pour communiquer des données relatives à des opérations de comptage, et des messages de vérification de fonctionnement sont transmis sur l'autre voie de communication. Dans un deuxième mode de communication, l'inverse est réalisé. Le compteur intelligent (211, 212) bascule sur le deuxième mode de communication lorsque la voie de communication principale devient inopérante, et rebascule sur le premier mode de communication lorsqu'au moins un message de vérification de fonctionnement reçoit un acquittement sur la voie de communication principale.

## Description

### DOMAINE TECHNIQUE

Au moins un mode de réalisation concerne un procédé de communication dans un système de gestion automatisée de compteurs intelligents (« smart meters » en anglais), tels que des compteurs de consommation électrique, des compteurs de consommation d'eau, des compteurs de consommation de gaz, etc.

### ETAT DE LA TECHNIQUE ANTERIEURE

Il est connu des compteurs intelligents, de type compteurs d'énergie (compteurs électriques, compteurs de chaleur...) ou compteurs de fluides (compteurs de consommation de fluides : eau, gaz...), qui comprennent des interfaces de communication cellulaire permettant à un système de gestion automatisée d'effectuer une collecte à distance de données de consommation. Des données de consommation peuvent ainsi être transmises, à intervalles réguliers ou sur demande, jusqu'à un système d'information IS (« Information System » en anglais) les traitant de manière centralisée.

Par exemple, les compteurs intelligents communiquent avec le système d'information IS en utilisant une infrastructure de communication cellulaire de type 5G (5^{e} Génération), ou de type GPRS (« General Packet Radio Service » en anglais), ou de type UMTS (« Universal Mobile Telecommunication System » en anglais), ou de type LTE-MTC (« Long-Term Evolution Machine Type Communication » en anglais) aussi connu sous le diminutif LTE-M, ou de type NB-IoT (« NarrowBand Internet of Things » en anglais).

Un problème se pose lorsque l'infrastructure de communication cellulaire est indisponible. Des opérations de relève de données de comptage, ou de reconfiguration des compteurs intelligents, se trouvent alors retardées jusqu'à ce que l'infrastructure de communication cellulaire soit à nouveau disponible.

Il est alors souhaitable de fournir une solution qui permette de pallier au moins cet inconvénient de l'état de la technique.

### EXPOSE DE L'INVENTION

A cet effet, il est proposé un procédé de communication d'un compteur intelligent avec un système d'information gérant à distance le compteur intelligent dans un système de gestion automatisée, le compteur intelligent comportant : une première interface de communication permettant une première voie de communication avec le système d'information utilisant l'Internet par l'intermédiaire d'une passerelle résidentielle ; et une deuxième interface de communication permettant une deuxième voie de communication utilisant un réseau cellulaire. Le procédé est tel que le compteur intelligent implémente un premier mode de communication comportant :
- utiliser une voie de communication, dite voie de communication principale, parmi les première et deuxième voies de communication, pour communiquer des données relatives à des opérations de comptage ;
- transmettre à destination du système d'information des messages de vérification de fonctionnement sur l'autre voie de communication, dite voie de communication secondaire.

De plus, le procédé est tel que le compteur intelligent implémente un deuxième mode de communication comportant :
- utiliser la voie de communication secondaire, pour communiquer les données relatives aux opérations de comptage ;
- transmettre à destination du système d'information les messages de vérification de fonctionnement sur la voie de communication principale.

Et le procédé est tel que le compteur intelligent exécute en outre :
- basculer sur le deuxième mode de communication lorsque la voie de communication principale devient inopérante ; et
- rebasculer sur le premier mode de communication lorsqu'au moins un dit message de vérification de fonctionnement reçoit un acquittement du système d'information sur la voie de communication principale.

Ainsi, deux voies de communication sont mises à disposition du compteur intelligent. Une voie de communication passant par un réseau cellulaire, et une voie de communication passant par l'Internet grâce à une passerelle domestique, typiquement celle de l'abonné auquel est attribué le compteur intelligent. Une voie de communication principale est définie parmi les deux voies de communication à disposition (par exemple, la voie de communication via l'Internet) et lorsque la voie principale est indisponible, l'autre voie de communication est utilisée. Des messages de vérification de fonctionnement sont utilisés pour vérifier que la voie de communication qui n'est pas utilisée à ce moment-là pour communiquer les données relatives aux opérations de comptage est toujours opérante.

Selon un mode de réalisation particulier, la deuxième voie de communication passe par l'intermédiaire d'un convertisseur de média comportant une interface de communication cellulaire pour communiquer avec le système d'information et une interface de communication à courte portée pour communiquer avec le compteur intelligent, le convertisseur de média servant d'intermédiaire entre le compteur intelligent et le système d'information sur la deuxième voie de communication.

Selon un mode de réalisation particulier, avant d'autoriser de communiquer les données relatives à des opérations de comptage sur l'une quelconque des voies de communication parmi les première et deuxième voies de communication, un appairage est réalisé entre le compteur intelligent et le système d'information par l'intermédiaire du convertisseur de média sur la deuxième voie de communication.

Selon un mode de réalisation particulier, le compteur intelligent bascule depuis le premier mode de communication vers le deuxième mode de communication lorsque le compteur intelligent reçoit une requête du système d'information via la deuxième voie de communication alors que, pour le compteur intelligent, le premier mode de communication était actif.

Selon un mode de réalisation particulier, lorsqu'aucune des première et deuxième voies de communication n'est opérante, le compteur intelligent transmet les messages de vérification de fonctionnement sur chacune des première et deuxième voies de communication.

Il est également proposé ici un produit programme d'ordinateur comportant des instructions pour exécuter le procédé exposé ci-dessus dans l'un quelconque de ses modes de réalisation, lorsque les instructions sont exécutées par un processeur. Il est aussi proposé ici un support de stockage d'informations stockant des instructions pour exécuter le procédé exposé ci-dessus dans l'un quelconque de ses modes de réalisation, lorsque les instructions sont lues depuis le support de stockage d'informations et exécutées par un processeur.

Il est également proposé ici un compteur intelligent destiné à être utilisé dans un système de gestion automatisée comportant un système d'information gérant à distance des compteurs intelligents du système de gestion automatisée, dans lequel le compteur intelligent en question comporte : une première interface de communication permettant une première voie de communication avec le système d'information utilisant l'Internet par l'intermédiaire d'une passerelle résidentielle ; et une deuxième interface de communication permettant une deuxième voie de communication utilisant un réseau cellulaire.

De plus, le compteur intelligent comporte en outre de la circuiterie électronique configurée pour implémenter un premier mode de communication comportant :
- utiliser à titre principal une voie de communication, dite voie de communication principale, parmi les première et deuxième voies de communication, pour communiquer des données relatives à des opérations de comptage ;
- transmettre à destination du système d'information des messages de vérification de fonctionnement sur l'autre voie de communication, dite voie de communication secondaire.

La circuiterie électronique du compteur intelligent est en outre configurée pour implémenter un deuxième mode de communication comportant :
- utiliser la voie de communication secondaire, pour communiquer les données relatives aux opérations de comptage ;
- transmettre à destination du système d'information les messages de vérification de fonctionnement sur la voie de communication principale.

Et la circuiterie électronique du compteur intelligent est en outre configurée pour :
- basculer sur le deuxième mode de communication lorsque la voie de communication principale devient inopérante ; et
- rebasculer sur le premier mode de communication lorsqu'au moins un dit message de vérification de fonctionnement reçoit un acquittement du système d'information sur la voie de communication principale.

Il est également proposé ici un système de gestion automatisée comportant un système d'information et une pluralité de compteurs intelligents tels qu'exposés ci-dessus, chaque compteur intelligent étant associé à une passerelle résidentielle par laquelle communiquer via la première voie de communication.

Dans un mode de réalisation particulier, le système de gestion automatisée comporte au moins un convertisseur de média servant d'intermédiaire entre un regroupement de dits compteurs intelligents et le système d'information sur la deuxième voie de communication, le convertisseur de média comportant une interface de communication cellulaire pour communiquer avec le système d'information et une interface de communication à courte portée pour communiquer avec les compteurs intelligents du regroupement.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un système de gestion automatisée de compteurs intelligents dans lequel la présente invention peut être implémentée ;
[Fig. 2] illustre schématiquement un exemple d'architecture matérielle de dispositif du système de gestion automatisée ;
[Fig. 3] illustre schématiquement des échanges intervenant dans le système de gestion automatisée pour réaliser un appairage entre un compteur intelligent et un système d'information ;
[Fig. 4] illustre schématiquement des échanges intervenant dans le système de gestion automatisée selon un premier mode de communication ;
[Fig. 5] illustre schématiquement des échanges intervenant dans le système de gestion automatisée selon un deuxième mode de communication ; et
[Fig. 6] illustre schématiquement une machine d'états de basculement entre notamment le premier mode de communication et le deuxième mode de communication.

### EXPOSE DETAILLE DE MODES DE REALISATION

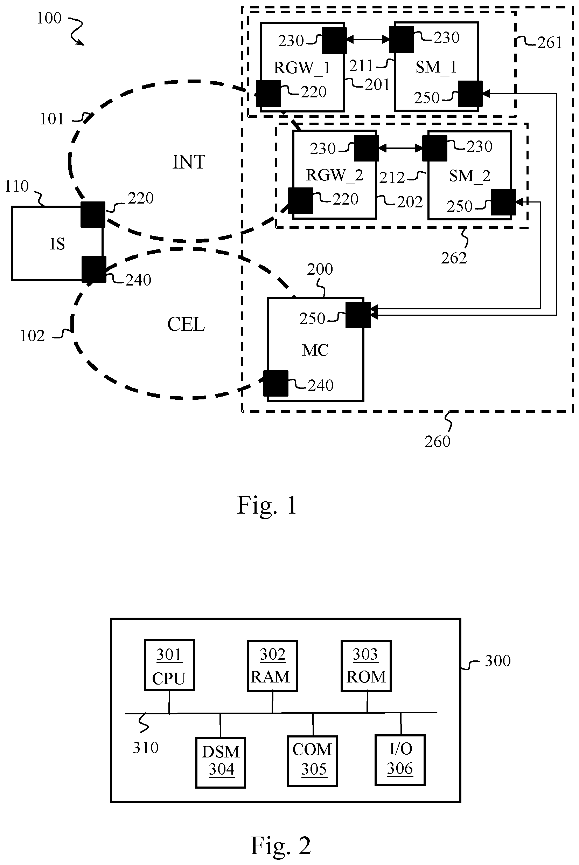

La **Fig. 1** illustre schématiquement un système de gestion automatisée 100 dans lequel la présente invention peut être implémentée. Le système de gestion automatisée 100 est configuré pour réaliser une collecte de données de consommation issues de mesures effectuées par des compteurs intelligents.

Les données de consommation collectées sont traitées par un système d'information IS (« Information System » en anglais) 110 qui gère à distance les compteurs intelligents.

Le système d'information IS 110 est un équipement gestionnaire centralisé et les compteurs intelligents sont inscrits auprès du système d'information IS 110, selon des abonnements souscrits par des utilisateurs (appelé « abonnés ») respectifs auprès d'un distributeur pour lequel le système d'information IS 110 opère.

Par exemple, les compteurs intelligents sont des compteurs d'eau, des compteurs de gaz, des compteurs électriques, etc.

Par exemple, le système d'information IS 110 comprend diverses composantes dont un système de tête de réseau HES (« Head-End System » en anglais), un système de gestion de données de compteurs MDMS (« Meter Data Management System » en anglais), et un système de gestion de clefs KMS (« Key Management System » en anglais). Le système de tête de réseau HES est configuré pour effectuer la gestion de transmissions dans le cadre de la collecte de données de consommation. Le système de gestion de données de compteurs MDMS est configuré pour traiter les données de consommation collectées. Le système de gestion de clefs KMS est configuré pour stocker des clefs de chiffrement nécessaires au système de gestion de données de compteurs MDMS et aux compteurs intelligents, ainsi qu'à tout équipement intermédiaire entre le système d'information IS 110 et les compteurs intelligents en question. Les composantes de système d'information IS 110 communiquent par exemple en utilisant l'Internet, ou plus généralement un réseau de type IP (« Internet Protocol » en anglais), ou en utilisant potentiellement un réseau privé virtuel VPN (« Virtual Private Network » en anglais).

Le système d'information IS 110 comporte une première interface de communication 220 permettant de communiquer via l'Internet 101 (libellé INT sur la Fig. 1) et une deuxième interface de communication 240, à longue portée, permettant de communiquer via un réseau cellulaire CEL 102. Un tel agencement fournit ainsi deux voies de communication avec le système d'information IS 110 pour permettre la gestion à distance des compteurs intelligents.

Par exemple, le réseau cellulaire CEL 102 est un réseau de communication sans-fil de type 5G (5^{e} Génération). Selon d'autres exemples, le réseau cellulaire CEL 102 est un réseau de communication sans-fil de type GPRS (« General Packet Radio Service » en anglais), UMTS (« Universal Mobile Telecommunication System » en anglais), LTE-MTC (« Long-Term Evolution Machine Type Communication » en anglais) aussi connu sous le diminutif LTE-M, ou NB-IoT (« NarrowBand Internet of Things » en anglais).

Deux compteurs intelligents SM_1 211, SM_2 212 sont représentés de manière illustrative sur la Fig. 1. Le système de gestion automatisée comporte typiquement une quantité bien plus importante de compteurs intelligents.

Les compteurs intelligents SM_1 211, SM_2 212 comportent chacun une première interface de communication permettant d'utiliser une première voie de communication avec le système d'information IS 110 utilisant l'Internet 101, par l'intermédiaire d'une passerelle résidentielle. Chacun des compteurs intelligents SM_1 211, SM_2 212 est ainsi respectivement associé à une passerelle résidentielle RGW _1 201, RGW_2 202. Ces passerelles résidentielles RGW _1 201, RGW_2 202 sont installées chez les abonnés respectifs qui détiennent les compteurs intelligents SM_1 211, SM_2 212. En d'autres termes, le compteur intelligent SM_1 211 et la passerelle résidentielle RGW _1 201 sont installés pour offrir des services respectifs (comptage de consommation pour l'un, accès à l'Internet 101 pour l'autre) à des locaux 261 d'un premier abonné, et le compteur intelligent SM_2 212 et la passerelle résidentielle RGW_2 202 sont installés pour offrir lesdits services respectifs à des locaux 262 d'un deuxième abonné.

Chaque passerelle résidentielle RGW_1 201, RGW_2 202 comporte alors une interface de communication 220 avec l'Internet 101 permettant ainsi de communiquer par ce biais avec le système d'information IS 110. Dans un mode de réalisation particulier, un réseau privé virtuel VPN peut être établi entre chaque passerelle résidentielle RGW _1 201, RGW_2 202 et le système d'information IS 110 pour sécuriser les échanges.

Grâce à cette première interface de communication, les compteurs intelligents SM_1 211, SM_2 212 communiquent avec la passerelle résidentielle RGW _1 201, RGW_2 202, typiquement en Wi-Fi. D'autres technologies de communication à courte portée peuvent être utilisées en variante, par exemple Ethernet, Bluetooth, Zigbee, KNX, KNX-RF... La passerelle résidentielle RGW _1 201, RGW_2 202 peut alors être amenée à implémenter une fonction de convertisseur de média et ainsi réaliser des conversions de format de messages.

Les compteurs intelligents SM_1 211, SM_2 212 comportent aussi chacun une deuxième interface de communication permettant une deuxième voie de communication utilisant le réseau cellulaire CEL 102.

Dans une première implémentation, cette deuxième interface de communication est une interface de communication à longue portée, de type cellulaire, permettant de communiquer avec le système d'information IS 110 directement via le réseau cellulaire CEL 102.

Dans une deuxième implémentation, cette deuxième interface de communication est une interface de communication à courte portée permettant de communiquer avec un dispositif qui sert d'intermédiaire avec le réseau cellulaire CEL 102 et donc avec le système d'information IS 110.

Ainsi, dans un mode de réalisation particulier lié à cette deuxième implémentation, le système de gestion automatisée 100 permet de gérer des installations 260, équipant des immeubles ou des ensembles résidentiels, où un regroupement de compteurs intelligents de différents abonnés est localisé. Pour ce faire, comme illustré sur la Fig. 1, un convertisseur de média MC (« Media Converter » en anglais) 200 est utilisé. Le convertisseur de média MC 200 permet de gérer ce regroupement de compteurs intelligents, et donc de servir d'intermédiaire entre le système d'information IS 110, d'un côté, et les compteurs intelligents du regroupement, d'un autre côté.

La présence du convertisseur de média MC 200 permet d'équiper les compteurs intelligents du regroupement de moyens de communication à courte portée plutôt que de devoir les équiper de moyens de communication à longue portée, de type cellulaire, pour communiquer avec le système d'information IS 110 via le réseau cellulaire CEL 102. Le convertisseur de média MC 200 permet ainsi de réduire la complexité et le coût de fabrication des compteurs intelligents, puisque les technologies de communication à courte portée sont typiquement moins complexes et onéreuses que celles à longue portée de type cellulaire.

Ainsi, comme schématiquement illustré sur la Fig. 1, les compteurs intelligents SM_1 211, SM_2 212 sont les compteurs intelligents d'un regroupement. Les compteurs intelligents SM_1 211, SM_2 212, ainsi que le convertisseur de média MC 200, sont munis d'une interface de communication à courte portée 250. Par exemple, l'interface de communication à courte portée 250 est adaptée pour établir un lien de communication conforme aux spécifications de télérelève M-Bus (« Meter Bus » en anglais), telles que définies dans la norme EN 13757-2, ou aux spécifications wM-Bus (« Wireless M-Bus » en anglais), telles que définies dans la norme EN 13757-4. D'autres technologies de communication à courte portée peuvent être utilisées, telles que Bluetooth, Zigbee, KNX, KNX-RF... Alors, les compteurs intelligents SM_1 211, SM_2 212 du regroupement comportent une première interface de communication à courte portée 230 pour communiquer avec les passerelles résidentielles RGW_1 201, RGW_2 202 qui leur sont respectivement associées et une deuxième interface de communication à courte portée 250 pour communiquer avec le convertisseur de média MC 200. De son côté, le convertisseur de média MC 200 comporte une première interface de communication à longue portée, de type cellulaire, 240 pour communiquer avec le système d'information IS 110 et une deuxième interface de communication à courte portée 250 pour communiquer avec les compteurs intelligents SM_1 211, SM_2 212 du regroupement.

Comme détaillé ci-après, les compteurs intelligents SM_1 211, SM_2 212 comportent de la circuiterie électronique adaptée et configurée pour sélectivement utiliser la première voie de communication ou la deuxième voie de communication pour communiquer des données relatives à des opérations de comptage. Les données relatives à des opérations de comptage sont par exemple des relevés de comptage transmis par le compteur intelligent en question au système d'information IS 110, des résultats de lectures de registres transmis par le compteur intelligent en question au système d'information IS 110, des ordres d'action transmis par le système d'information IS 110 au compteur intelligent en question, des données de configuration (ou reconfiguration) transmises par le système d'information IS 110 au compteur intelligent en question, etc.

La **Fig. 2** illustre schématiquement un exemple d'architecture matérielle 300, qui est adapté pour implémenter tout contrôleur de dispositif du système de gestion automatisée 100. L'exemple d'architecture matérielle est ainsi adapté pour implémenter un contrôleur de système d'information IS, ou de toute composante du système d'information IS. L'exemple d'architecture matérielle est aussi adapté pour implémenter un contrôleur de compteur intelligent. L'exemple d'architecture matérielle est aussi adapté pour implémenter un contrôleur de convertisseur de média MC 200.

L'architecture matérielle 300 comprend alors, reliés par un bus de communication 310 : un processeur ou CPU (« Central Processing Unit » en anglais) 301 ; une mémoire vive RAM (« Random Access Memory » en anglais) 302 ; une mémoire morte ROM (« Read Only Memory » en anglais) 303, ou EEPROM (« Electrically Erasable Programmable ROM » en anglais), ou une mémoire de type Flash ; un support de stockage de données DSM (« Data Storage Medium » en anglais) 304, tel qu'un disque dur HDD (« Hard Disk Drive » en anglais), ou un lecteur de support de stockage, tel qu'un lecteur de cartes SD (« Secure Digital » en anglais) ; et au moins une interface de communication COM 305. Selon le dispositif considéré, l'architecture matérielle 300 peut en outre comprendre des entrées/sorties (« Inputs / Outputs » en anglais) I/O 306, par exemple pour effectuer des mesures de consommation.

Le processeur 301 est capable d'exécuter des instructions chargées dans la RAM 302 à partir de la ROM 303, d'une mémoire externe (non représentée), d'un support de stockage, tel qu'une carte SD, ou d'un réseau de communication. Lorsque l'architecture matérielle 300 est mise sous tension, le processeur 301 est capable de lire de la RAM 302 des instructions et de les exécuter. Ces instructions forment un programme d'ordinateur causant la mise en œuvre, par le processeur 301, des étapes et algorithmes décrits ici en relation avec le dispositif ou équipement concerné.

Tout ou partie des étapes et algorithmes décrit ici peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant (« chip » en anglais) ou un ensemble de composants (« chipset » en anglais), tel qu'un FPGA (« Field-Programmable Gate Array » en anglais) ou un ASIC (« Application-Specific Integrated Circuit » en anglais). D'une manière générale, chaque dispositif ou équipement du système de gestion automatisée 100 comprend de la circuiterie électronique agencée et configurée pour implémenter les étapes et algorithmes décrits ici en relation avec le dispositif ou équipement en question.

Pour permettre à un dit compteur intelligent de communiquer des données relatives à des opérations de comptage avec le système d'information IS 110, un appairage est réalisé. Cet appairage peut être réalisé par configuration manuelle, ou être réalisé de manière automatique. Un mode de réalisation particulier d'appairage est décrit ci-après.

Dans un mode de réalisation particulier, avant d'autoriser de communiquer les données relatives à des opérations de comptage sur l'une quelconque des voies de communication parmi les première et deuxième voies de communication, un appairage est réalisé entre le compteur intelligent en question et le système d'information IS 110 par l'intermédiaire du convertisseur de média MC 200 sur la deuxième voie de communication.

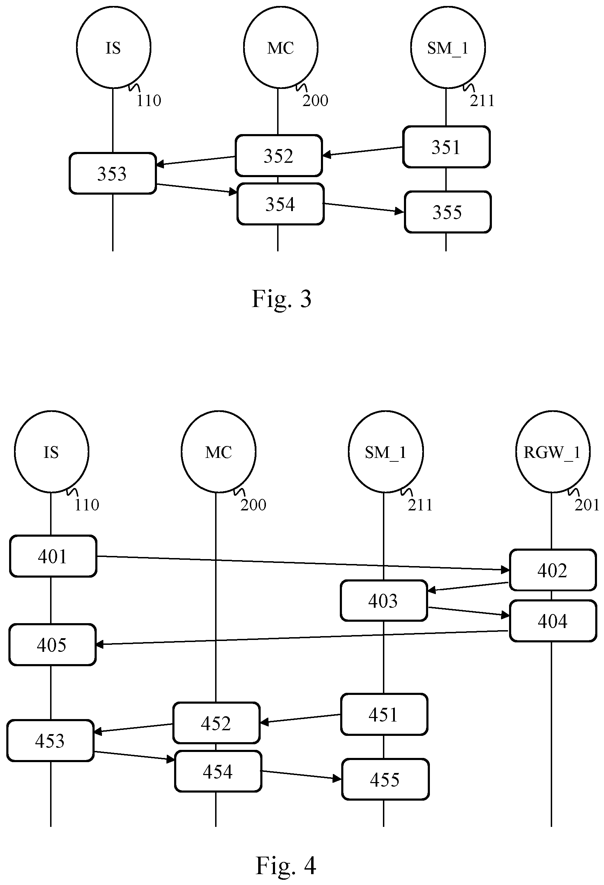

La **Fig. 3** illustre schématiquement des échanges intervenant dans le système de gestion automatisée 100 pour réaliser cet appairage.

Considérons par la suite, par exemple, que l'appairage concerne le compteur intelligent SM_1 211.

Dans une étape 351, le compteur intelligent SM_1 211 déclenche une demande d'appairage, ce qui entraîne l'émission par le compteur intelligent SM_1 211 vers le convertisseur de média MC 200 d'une requête d'appairage.

Dans un mode de réalisation particulier, le compteur intelligent SM_1 211 dispose d'un bouton, par exemple en face avant, sur lequel appuyer (e.g., appui long d'une durée supérieure à 2 secondes) pour déclencher une demande d'appairage. Le déclenchement de la demande d'appairage peut en variante être réalisé par la sélection d'un élément dans un menu déroulant d'une interface homme-machine du compteur intelligent SM_1 211. Le déclenchement de la demande d'appairage peut encore en variante être réalisé par réception d'un message ou d'une instruction externe, par exemple en provenance du convertisseur de média MC 200.

La requête d'appairage est un message qui inclut :
- une information de type de message (en clair), qui identifie que le message est une requête d'appairage ;
- une information d'identifiant de compteur intelligent, sous forme chiffrée, qui identifie le compteur intelligent en question, cet identifiant étant connu du système d'information IS 110.

L'information d'identifiant de compteur intelligent est par exemple un numéro de série du compteur intelligent en question ou une information dérivée dudit numéro de série.

L'information d'identifiant de compteur intelligent est préférentiellement chiffrée grâce à une clef symétrique K_DSO, qui est spécifique au système d'information IS 110 et qui est connue du compteur intelligent en question.

La clef symétrique K_DSO est par exemple configurée, en mémoire du compteur intelligent en question (ici le compteur intelligent SM_1 211), en usine ou lors de l'installation du compteur intelligent en question et de la prise d'abonnement auprès du distributeur concerné.

Dans un mode de réalisation particulier, le compteur intelligent en question dispose d'une autre clef symétrique MK_DSO, spécifique au système d'information IS 110. Cette clef symétrique MK_DSO est appelée clef maître (« master key » en anglais) et est utilisée pour chiffrer d'autres clefs.

Dans une étape 352, le convertisseur de média MC 200 reçoit la requête d'appairage transmise par le compteur intelligent SM_1 211 à l'étape 351. Le convertisseur de média MC 200 effectue une conversion de format de manière à relayer la requête d'appairage à destination du système d'information IS 110 via le réseau cellulaire CEL 102.

Préalablement à l'installation sur site du convertisseur de média MC 200, les informations relatives au système d'information IS 110 auxquels les compteurs intelligents chez les abonnés derrière le convertisseur de média MC 200 *(i.e.,* les compteurs intelligents du regroupement) sont susceptibles d'être appairés sont programmées dans le convertisseur de média MC 200 (en usine, chez l'installateur ou sur site, typiquement).

Le convertisseur de média MC 200 transmet alors au système d'information IS 110 une requête relayée d'appairage. Ladite requête relayée d'appairage reprend au minimum l'information d'identifiant de compteur intelligent telle qu'elle était présentée dans la requête d'appairage transmise par le compteur intelligent SM_1 211 *(i.e.,* sous forme chiffrée).

A noter qu'à ce stade les échanges entre le compteur intelligent SM_1 211 et le convertisseur de média MC 200 ne sont pas chiffrés. Comme expliqué plus loin, les échanges entre chaque compteur intelligent du regroupement et le convertisseur de média MC 200 pourront ultérieurement, dans un mode de réalisation particulier, être chiffrés à l'aide d'une clef symétrique K_WM, spécifique au compteur intelligent en question.

Les échanges entre le convertisseur de média MC 200 et le système d'information IS 110 via le réseau cellulaire CEL 102 sont réalisés grâce à un protocole sécurisé, de manière à assurer au moins la confidentialité des données échangées, par exemple grâce au protocole TLS (« Transport Layer Security » en anglais).

Dans une étape 353, le système d'information IS 110 reçoit la requête relayée d'appairage, et déchiffre l'information d'identifiant de compteur intelligent. Et après déchiffrement grâce à la clef symétrique K_DSO, le système d'information IS 110 reconnaît l'information d'identifiant de compteur intelligent comme correspondant à un identifiant de compteur intelligent qui doit lui être rattaché *(i.e.,* abonnement souscrit auprès du distributeur concerné). Alors, le système d'information IS 110 répond au convertisseur de média MC 200 par un acquittement positif à la requête relayée d'appairage.

L'acquittement positif est un message qui inclut :
- une information de type de message (en clair), qui identifie que le message est un acquittement positif à une requête d'appairage ;
- la clef symétrique K_WM, spécifique au compteur intelligent SM_1 211, en clair ; et
- la même clef symétrique K_WM, chiffrée à l'aide de la clef maître MK_DSO.

D'autres informations, à destination du compteur intelligent SM_1 211, peuvent être incluses sous forme chiffrée grâce à la clef symétrique K_DSO dans l'acquittement positif, comme par exemple des informations de configuration à appliquer par le compteur intelligent SM_1 211.

Comme le reste des échanges entre le convertisseur de média MC 200 et le système d'information IS 110, l'acquittement positif est transmis grâce à un protocole sécurisé, par exemple grâce au protocole TLS.

Dans une étape 354, le convertisseur de média MC 200 reçoit l'acquittement positif. Le convertisseur de média MC 200 lit et mémorise la clef symétrique K_WM fournie en clair (au-delà du chiffrement, par exemple grâce au protocole TLS, appliqué dans les échanges entre le convertisseur de média MC 200 et le système d'information IS 110) dans l'acquittement positif transmis par le système d'information IS 110.

Ensuite, le convertisseur de média MC 200 génère un message d'acceptation d'appairage à destination du compteur intelligent SM_1 211 incluant la clef symétrique K_WM, chiffrée à l'aide de la clef maître MK_DSO *(i.e.,* telle qu'elle était présentée dans l'acquittement positif transmis par le système d'information IS 110).

Une fois le message d'acceptation d'appairage reçu, dans une étape 355, le compteur intelligent SM_1 211 peut déchiffrer la clef symétrique K_WM grâce à la clef maître MK _DSO, ce qui permet de chiffrer ultérieurement les échanges entre le compteur intelligent SM_1 211 et le convertisseur de média MC 200.

Le compteur intelligent SM_1 211 est alors appairé avec le système d'information IS 110 et des données relatives à des opérations de comptage peuvent alors être échangées entre le compteur intelligent SM_1 211 et le système d'information IS 110. Ces données peuvent être chiffrées de bout en bout avec la clé K_DSO. Les échanges entre le compteur intelligent SM_1 211 et le système d'information IS 110 peuvent par exemple s'appuyer sur le protocole DLMS / COSEM (« Device Language Message Specification » / « Companion Specification for Energy Metering » en anglais) ou LwM2M (« Lightweight Machine to Machine » en anglais). Ainsi, lorsque la deuxième voie de communication (via le réseau cellulaire CEL 102) par l'intermédiaire du convertisseur de média MC 200 est utilisée, le convertisseur de média MC 200 n'a pas accès à ces données échangées entre le compteur intelligent SM_1 211 et le système d'information IS 110. De même, lorsque la première voie de communication (via l'Internet 101) par l'intermédiaire de la passerelle résidentielle RGW _1 201 est utilisée, la passerelle résidentielle RGW _1 201 n'a pas accès à ces données échangées entre le compteur intelligent SM_1 211 et le système d'information IS 110.

Pour communiquer des données relatives à des opérations de comptage, le compteur intelligent SM_1 211 et le système d'information IS 110 implémentent un premier mode de communication dans lequel une voie de communication, dite voie de communication principale, parmi les première et deuxième voies de communication est utilisée. De plus, le compteur intelligent SM_1 211 transmet à destination du système d'information IS 110 des messages de vérification de fonctionnement sur l'autre voie de communication, dite voie de communication secondaire. Ces messages de vérification de fonctionnement sont parfois dénommés messages de type « keep alive ».

Lorsque le système d'information IS 110 reçoit ces messages de vérification de fonctionnement, le système d'information IS 110 y répond par des acquittements aussi via la voie de communication secondaire. Cela permet au compteur intelligent SM_1 211 et au système d'information IS 110 de savoir si la voie de communication secondaire est opérationnelle ou pas, et si la voie de communication secondaire peut servir ou pas de voie de communication de secours en cas de défaillance de la voie de communication principale.

Le compteur intelligent SM_1 211 et le système d'information IS 110 implémentent aussi un deuxième mode de communication qui utilise la voie de communication secondaire pour communiquer les données relatives aux opérations de comptage. Dans ce deuxième mode de communication, le compteur intelligent SM_1 211 transmet à destination du système d'information IS 110 des messages de vérification de fonctionnement sur la voie de communication principale. Lorsque le système d'information IS 110 reçoit ces messages de vérification de fonctionnement, le système d'information IS 110 y répond par des acquittements aussi via la voie de communication principale. Cela permet au compteur intelligent SM_1 211 et au système d'information IS 110 de savoir si la voie de communication principale est opérationnelle ou pas, et si un retour des communications sur la voie de communication principale peut ou pas être effectué.

Les messages de vérification de fonctionnement sont régulièrement envoyés, sur l'une ou l'autre voie de communication, selon le mode de communication qui est actif parmi les premier et deuxième modes de communication. Par exemple, les messages de vérification de fonctionnement sont envoyés à intervalles temporels réguliers.

Préférentiellement, la voie de communication principale est la première voie de communication (via l'Internet 101) et la voie de communication secondaire est la deuxième voie de communication (via le réseau cellulaire CEL 102).

La **Fig. 4** illustre schématiquement des échanges intervenant dans le système de gestion automatisée 100 selon le premier mode de communication, considérant ici que la voie de communication principale est la première voie de communication (via l'Internet 101) et la voie de communication secondaire est la deuxième voie de communication (via le réseau cellulaire CEL 102).

Dans une étape 401, le système d'information IS 110 transmet à destination du compteur intelligent SM_1 211 une requête via la première voie de communication. La requête est reçue par la passerelle résidentielle RGW _1 201 dans une étape 402, et la passerelle résidentielle RGW_1 201 relaie la requête au compteur intelligent SM_1 211.

Dans une étape 403, le compteur intelligent SM_1 211 reçoit la requête, traite la requête et transmet à destination du système d'information IS 110 une réponse aussi via la première voie de communication. La réponse est reçue par la passerelle résidentielle RGW _1 201 dans une étape 404, et la passerelle résidentielle RGW _1 201 relaie la réponse au système d'information IS 110.

Dans une étape 405, le système d'information IS 110 reçoit la réponse et la traite.

A noter que les échanges sur la première de communication pour communiquer les données relatives aux opérations de comptage peuvent se dérouler dans l'autre sens, c'est-à-dire à l'initiative du compteur intelligent SM_1 211.

Dans une étape 451, le compteur intelligent SM_1 211 transmet à destination du système d'information IS 110 un message de vérification de fonctionnement sur la deuxième voie de communication. Le message de vérification de fonctionnement est reçu par le convertisseur de média MC 200 dans une étape 452, et le convertisseur de média MC 200 relaie le message de vérification de fonctionnement au système d'information IS 110.

Dans une étape 453, le système d'information IS 110 reçoit le message de vérification de fonctionnement via la deuxième voie de communication. Le système d'information IS 110 sait alors que la deuxième voie de communication est opérationnelle et génère un acquittement que le système d'information IS 110 transmet à destination du compteur intelligent SM_1 211 aussi via la deuxième voie de communication. L'acquittement est reçu par le convertisseur de média MC 200 dans une étape 454, et le convertisseur de média MC 200 relaie l'acquittement au compteur intelligent SM_1 211.

Dans une étape 455, le compteur intelligent SM_1 211 reçoit l'acquittement et le traite. Le compteur intelligent SM_1 211 sait alors que la deuxième voie de communication est opérationnelle.

Lorsque le compteur intelligent SM_1 211 ne reçoit pas d'acquittement pour une quantité prédéterminée *N* (*N* ≥ *1*) de messages de vérification de fonctionnement successifs, cela signifie que la voie de communication secondaire (ici la deuxième voie de communication) est inopérante et qu'il n'est pas souhaitable d'opérer de basculement sur le deuxième mode de communication. Le compteur intelligent SM_1 211 continue toutefois d'émettre des messages de vérification de fonctionnement sur la voie secondaire dans l'espoir que celle-ci soit rétablie et que des acquittements soient alors de nouveau reçus.

Lorsque le compteur intelligent SM_1 211 ne reçoit pas de nouvelle requête de la part du système d'information IS 110 via la voie de communication principale pendant une durée préprogrammée (par exemple pendant 3 heures), la voie de communication principale est considérée comme étant devenue inopérante et un basculement sur le deuxième mode de communication est réalisé. Le compteur intelligent SM_1 211 peut aussi détecter que la voie de communication principale est devenue inopérante lorsque le compteur intelligent SM_1 211 reçoit une requête de la part du système d'information IS 110 via la voie de communication secondaire alors que, du point de vue du compteur intelligent SM_1 211, le premier mode de communication était actif. Cela signifie que le système d'information IS 110 a détecté de son côté que la voie de communication principale était devenue inopérante et a basculé sur la voie de communication secondaire. Le compteur intelligent SM_1 211 bascule alors lui aussi sur la voie de communication secondaire et active le deuxième mode de communication. Cette situation survient lorsque le système d'information IS 110 n'a pas reçu de réponse de la part du compteur intelligent SM_1 211 via la voie de communication principale pour une quantité prédéterminée *M* (*M >* 1, par exemple *M = 3*) de requêtes successives.

De même, lorsque le compteur intelligent SM_1 211 est à l'initiative de l'échange et que le compteur intelligent SM _1 211 ne reçoit pas de réponse de la part du système d'information IS 110 via la voie de communication principale pour la quantité prédéterminée *M* (*M >* 1, par exemple *M = 3*) de requêtes successives, le compteur intelligent SM_1 211 détecte que la voie de communication principale est devenue inopérante et bascule sur la voie de communication secondaire en activant le deuxième mode de communication. Le système d'information IS 110 reçoit alors une requête de la part du compteur intelligent SM_1 211 via la voie de communication secondaire alors que, du point de vue du système d'information IS 110, le premier mode de communication était actif. Le système d'information IS 110 bascule alors lui aussi sur la voie de communication secondaire et active le deuxième mode de communication.

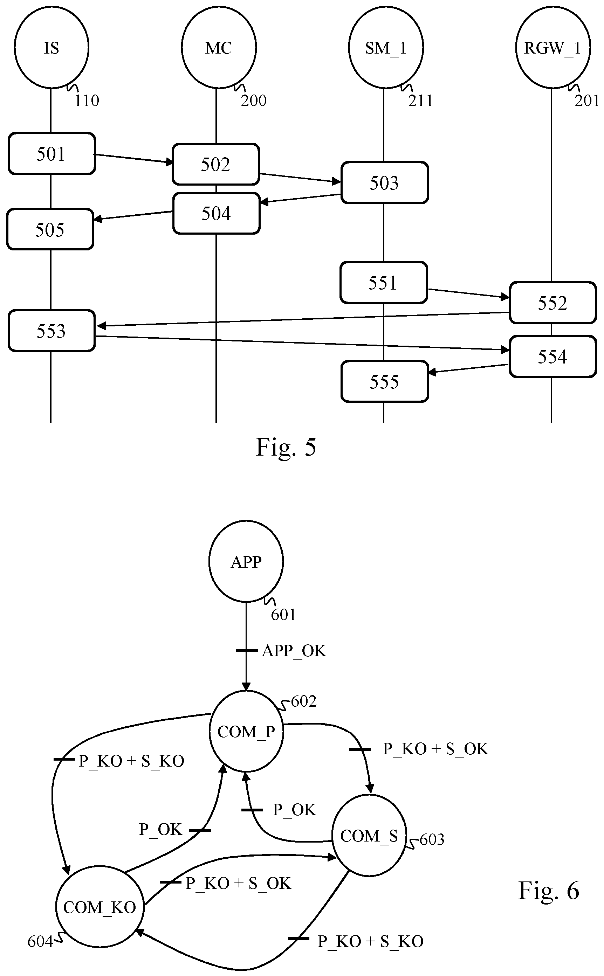

La **Fig. 5** illustre schématiquement des échanges intervenant dans le système de gestion automatisée 100 selon le deuxième mode de communication, considérant ici encore que la voie de communication principale est la première voie de communication (via l'Internet 101) et la voie de communication secondaire est la deuxième voie de communication (via le réseau cellulaire CEL 102).

Dans une étape 501, le système d'information IS 110 transmet à destination du compteur intelligent SM_1 211 une requête via la deuxième voie de communication. La requête est reçue par le convertisseur de média MC 200 dans une étape 502, et le convertisseur de média MC 200 relaie la requête au compteur intelligent SM_1 211.

Dans une étape 503, le compteur intelligent SM_1 211 reçoit la requête, traite la requête et transmet à destination du système d'information IS 110 une réponse aussi via la deuxième voie de communication. La réponse est reçue par le convertisseur de média MC 200 dans une étape 504, et le convertisseur de média MC 200 relaie la réponse au système d'information IS 110.

Dans une étape 505, le système d'information IS 110 reçoit la réponse et la traite.

A noter que les échanges sur le deuxième de communication pour communiquer les données relatives aux opérations de comptage peuvent se dérouler dans l'autre sens, c'est-à-dire à l'initiative du compteur intelligent SM_1 211.

Dans une étape 551, le compteur intelligent SM_1 211 transmet à destination du système d'information IS 110 un message de vérification de fonctionnement sur la première voie de communication. Le message de vérification de fonctionnement est reçu par la passerelle résidentielle RGW_1 201 dans une étape 552, et la passerelle résidentielle RGW_1 201 relaie le message de vérification de fonctionnement au système d'information IS 110.

Lorsque la voie de communication principale n'est toujours pas opérante, le message de vérification de fonctionnement ne parvient pas au système d'information IS 110, et par conséquent, le compteur intelligent SM_1 211 ne va pas recevoir de réponse à son message de vérification de fonctionnement. Le deuxième mode de communication va alors devoir être maintenu.

Considérons par la suite que la voie de communication principale (ici la première voie de communication) est redevenue opérante.

Alors dans une étape 553, le système d'information IS 110 reçoit le message de vérification de fonctionnement via la première voie de communication. Le système d'information IS 110 sait alors que la première voie de communication est opérationnelle et génère un acquittement que le système d'information IS 110 transmet à destination du compteur intelligent SM_1 211 aussi via la première voie de communication. L'acquittement est reçu par la passerelle résidentielle RGW _1 201 dans une étape 554, et la passerelle résidentielle RGW_1 201 relaie l'acquittement au compteur intelligent SM_1 211.

Dans une étape 555, le compteur intelligent SM_1 211 reçoit l'acquittement et le traite. Le compteur intelligent SM_1 211 sait alors que la première voie de communication est à nouveau opérationnelle.

Dans cette situation, le compteur intelligent SM_1 211 et le système d'information IS 110 rebasculent sur le premier mode de communication pour la suite des échanges.

Dans un mode de réalisation particulier, lorsqu'aucune des voies de communication parmi les première et deuxième voies de communication n'est opérante, le compteur intelligent SM_1 211 transmet à destination du système d'information IS 110 des messages de vérification de fonctionnement sur chacune des première et deuxième voies de communication. Lorsqu'au bout d'un temps, le compteur intelligent SM_1 211 reçoit un acquittement sur au moins l'une des première et deuxième voies de communication, le compteur intelligent SM_1 211 et le système d'information IS 110 activent le mode de communication adéquat parmi les premier et deuxième modes de communication : le premier mode de communication est activé si un acquittement est reçu sur la voie de communication principale, et le deuxième mode de communication est activé si un acquittement est reçu sur la voie de communication secondaire.

La **Fig. 6** illustre schématiquement une machine d'états de basculement entre notamment le premier mode de communication et le deuxième mode de communication. La machine d'états est applicable par le système d'information IS 110 et par chaque compteur intelligent du système de gestion automatisée 100.

La machine d'états débute dans un état d'initialisation 601. Comme illustré sur la Fig. 6, cet état d'initialisation est un état d'appairage APP 601 dans lequel des opérations d'appairage sont réalisées pour rattacher le compteur intelligent en question (par exemple, le compteur intelligent SM_1 211) au système d'information IS 110.

Lorsque l'appairage est terminé avec succès, une transition APP_OK fait basculer la machine d'états dans un état COM_P 602 dans lequel le premier mode de communication est actif et la voie de communication principale est utilisée pour communiquer les données relatives aux opérations de comptage. De plus, des messages de vérification de fonctionnement sont transmis par le compteur intelligent en question sur la voie de communication secondaire.

Dans l'état COM_P 602, lorsque la voie de communication principale devient inopérante et que la voie de communication secondaire est opérationnelle, une transition P_KO + S_OK fait basculer la machine d'états dans un état COM_S 603 dans lequel le deuxième mode de communication est actif et la voie de communication secondaire est utilisée pour communiquer les données relatives aux opérations de comptage. De plus, des messages de vérification de fonctionnement sont transmis par le compteur intelligent en question sur la voie de communication principale.

Dans l'état COM_P 602, lorsque la voie de communication principale devient inopérante et que la voie de communication secondaire est aussi inopérante, une transition P_KO + S_KO fait basculer la machine d'états dans un état COM_KO 604 dans lequel des messages de vérification de fonctionnement sont transmis par le compteur intelligent en question sur la voie de communication principale et sur la voie de communication secondaire. Aucune donnée relative aux opérations de comptage ne peut alors être transmise.

Dans l'état COM_S 603, lorsque la voie de communication secondaire devient inopérante et que la voie de communication principale est toujours inopérante, une transition P_KO + S_KO fait basculer la machine d'états dans l'état COM_KO 604.

Dans l'état COM_S 603, lorsque la voie de communication principale redevient opérationnelle, une transition P_OK fait basculer la machine d'états dans l'état COM_P 602.

Dans l'état COM_S 604, lorsque la voie de communication principale redevient opérationnelle, une transition P_OK fait basculer la machine d'états dans l'état COM_P 602.

Dans l'état COM_S 604, lorsque la voie de communication secondaire redevient opérationnelle et que la voie de communication principale est toujours inopérante, une transition P_KO + S_OK fait basculer la machine d'états dans l'état COM_S 603.

## Revendications

1. Procédé de communication d'un compteur intelligent (211, 212) avec un système d'information (110) gérant à distance le compteur intelligent (211, 212) dans un système de gestion automatisée (100), le compteur intelligent (211, 212) comportant :
- une première interface de communication (230) permettant une première voie de communication avec le système d'information (110) utilisant l'Internet (101) par l'intermédiaire d'une passerelle résidentielle (201, 202) ;
- une deuxième interface de communication (250) permettant une deuxième voie de communication utilisant un réseau cellulaire (102) ;
dans lequel le compteur intelligent (211, 212) implémente un premier mode de communication comportant :
- utiliser une voie de communication, dite voie de communication principale, parmi les première et deuxième voies de communication, pour communiquer des données relatives à des opérations de comptage ;
- transmettre à destination du système d'information (110) des messages de vérification de fonctionnement sur l'autre voie de communication, dite voie de communication secondaire ;
et le compteur intelligent (211, 212) implémente un deuxième mode de communication comportant :
- utiliser la voie de communication secondaire, pour communiquer les données relatives aux opérations de comptage ;
- transmettre à destination du système d'information (110) les messages de vérification de fonctionnement sur la voie de communication principale ;
et le compteur intelligent exécute en outre :
- basculer sur le deuxième mode de communication lorsque la voie de communication principale devient inopérante ; et
- rebasculer sur le premier mode de communication lorsqu'au moins un dit message de vérification de fonctionnement reçoit un acquittement du système d'information (110) sur la voie de communication principale.

2. Procédé selon la revendication 1, dans lequel la deuxième voie de communication passe par l'intermédiaire d'un convertisseur de média (200) comportant une interface de communication cellulaire (240) pour communiquer avec le système d'information (110) et une interface de communication à courte portée (250) pour communiquer avec le compteur intelligent (211, 212), le convertisseur de média (200) servant d'intermédiaire entre le compteur intelligent (211, 212) et le système d'information (110) sur la deuxième voie de communication.

3. Procédé selon la revendication 1 ou 2, dans lequel, avant d'autoriser de communiquer les données relatives à des opérations de comptage sur l'une quelconque des voies de communication parmi les première et deuxième voies de communication, un appairage est réalisé entre le compteur intelligent (211, 212) et le système d'information (110) par l'intermédiaire du convertisseur de média (200) sur la deuxième voie de communication.

4. Procédé selon l'une quelconque des revendications 1 à 3, dans lequel le compteur intelligent (211, 212) bascule depuis le premier mode de communication vers le deuxième mode de communication lorsque le compteur intelligent reçoit une requête du système d'information (110) via la deuxième voie de communication alors que, pour le compteur intelligent (211, 212), le premier mode de communication était actif.

5. Procédé selon l'une quelconque des revendications 1 à 4, dans lequel lorsqu'aucune des première et deuxième voies de communication n'est opérante, le compteur intelligent (211, 212) transmet les messages de vérification de fonctionnement sur chacune des première et deuxième voies de communication.

6. Produit programme d'ordinateur comportant des instructions pour exécuter le procédé selon l'une quelconque des revendications 1 à 5, lorsque les instructions sont exécutées par un processeur (301).

7. Support de stockage d'informations stockant des instructions pour exécuter le procédé selon l'une quelconque des revendications 1 à 5, lorsque les instructions sont lues depuis le support de stockage d'informations et exécutées par un processeur (301).

8. Compteur intelligent (211, 212) destiné à être utilisé dans un système de gestion automatisée (100) comportant un système d'information (110) gérant à distance des compteurs intelligents du système de gestion automatisée, dans lequel le compteur intelligent en question comporte :
- une première interface de communication (230) permettant une première voie de communication avec le système d'information (110) utilisant l'Internet (101) par l'intermédiaire d'une passerelle résidentielle (201, 202) ;
- une deuxième interface de communication (250) permettant une deuxième voie de communication utilisant un réseau cellulaire (102) ;
et dans lequel le compteur intelligent (211, 212) comporte en outre de la circuiterie électronique configurée pour implémenter un premier mode de communication comportant :
- utiliser à titre principal une voie de communication, dite voie de communication principale, parmi les première et deuxième voies de communication, pour communiquer des données relatives à des opérations de comptage ;
- transmettre à destination du système d'information (110) des messages de vérification de fonctionnement sur l'autre voie de communication, dite voie de communication secondaire ;
et la circuiterie électronique du compteur intelligent (211, 212) est en outre configurée pour implémenter un deuxième mode de communication comportant :
- utiliser la voie de communication secondaire, pour communiquer les données relatives aux opérations de comptage ;
- transmettre à destination du système d'information (110) les messages de vérification de fonctionnement sur la voie de communication principale ;
et la circuiterie électronique du compteur intelligent (211, 212) est en outre configurée pour :
- basculer sur le deuxième mode de communication lorsque la voie de communication principale devient inopérante ; et
- rebasculer sur le premier mode de communication lorsqu'au moins un dit message de vérification de fonctionnement reçoit un acquittement du système d'information (110) sur la voie de communication principale.

9. Système de gestion automatisée (100) comportant un système d'information (110) et une pluralité de compteurs intelligents (211, 212) selon la revendication 8, chaque compteur intelligent (211, 212) étant associé à une passerelle résidentielle (201, 202) par laquelle communiquer via la première voie de communication.

10. Système de gestion automatisée (100) selon la revendication 9, comportant au moins un convertisseur de média (200) servant d'intermédiaire entre un regroupement de dits compteurs intelligents (211, 212) et le système d'information (110) sur la deuxième voie de communication, le convertisseur de média (200) comportant une interface de communication cellulaire (240) pour communiquer avec le système d'information (110) et une interface de communication à courte portée (250) pour communiquer avec les compteurs intelligents (211, 212) du regroupement.
